# EUROPEAN PATENT APPLICATION

(11) **EP 3 599 543 A1**
(43) Date of publication of application: **29.01.2020**
(21) Application number: 19185981.8
(22) Date of filing: 12.07.2019
(51) Int. Cl.: G06F 3/044

(54) **CAPACITIVE TOUCH SCREEN MODULE AND ELECTRONIC TERMINAL**

(30) Priority: 27.07.2018 CN 201821207437 U
(71) Applicant: Shenzhen Goodix Technology Co., Ltd., Shenzhen, Guangdong 518045 (CN)
(72) Inventor: WANG, Peng, Shenzhen, Guangdong 518045 (CN); JIANG, Hong, Shenzhen, Guangdong 518045 (CN); LIU, Wu, Shenzhen, Guangdong 518045 (CN)
(74) Representative: Elzaburu S.L.P.

(57) **Abstract**

The utility model provides a capacitive touch screen module and an electronic terminal. The capacitive touch screen module includes: an externally mounted touch screen, the externally mounted touch screen includes: a cover and a sensing unit matrix located below the cover, and the sensing unit matrix includes a plurality of sensing units. For the capacitive touch screen module and the capacitive touch screen provided by the utility model, the spatial position of the finger can be accurately and effectively measured by providing the sensing unit matrix with a plurality of sensing units. The multi-finger touch situation can also effectively be identified, and the specific position touched by each finger can be identified, which effectively solves the technical problem in the prior art that it cannot be distinguished that the determined unique coordinate point is generated by a two-finger touch or a single-finger touch. The accuracy and reliability of the capacitive touch screen module are guaranteed, which is beneficial to the commercially promotion and application.

## Description

### TECHNICAL FIELD

The utility model relates to the technical field of touch screens, in particular, to a capacitive touch screen module and an electronic terminal.

### BACKGROUND

With the advancement of science and technology, touch screens (also known as touch panels) are becoming more and more widely used in, such as intelligent electronic products, multimedia teaching, industrial control, office users, and business inquiry devices of various banks. However, in the prior art, the touch screen is mostly operated by touching the surface of a cover of a mobile phone or a tablet with a finger, and a touch chip detects the position of the finger on the surface of the cover of the mobile phone or the tablet to realize human-computer interaction, that is, at present, the touch detection system mainly detects the position of the finger in a two-dimensional plane; as the market demand changes, the demand for detecting the position of the finger in a three-dimensional space is increasing.

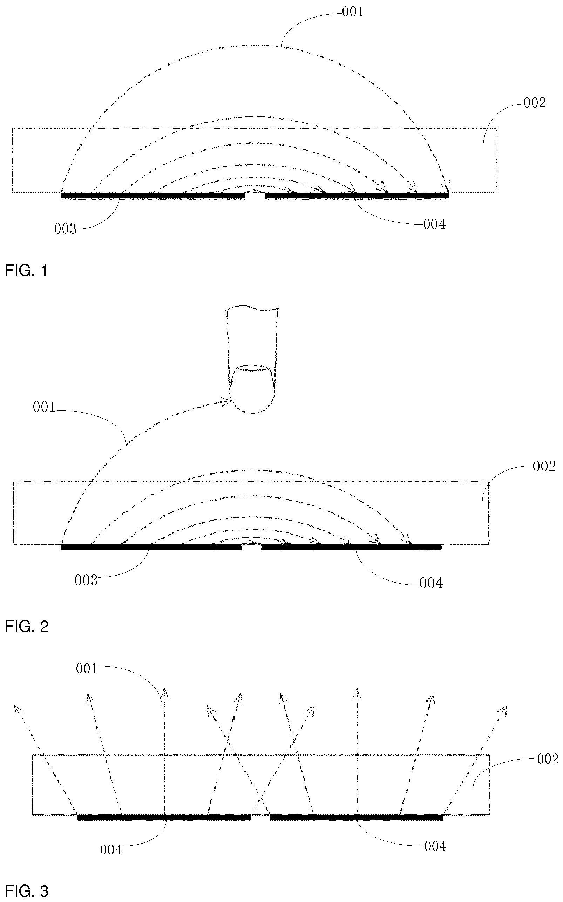

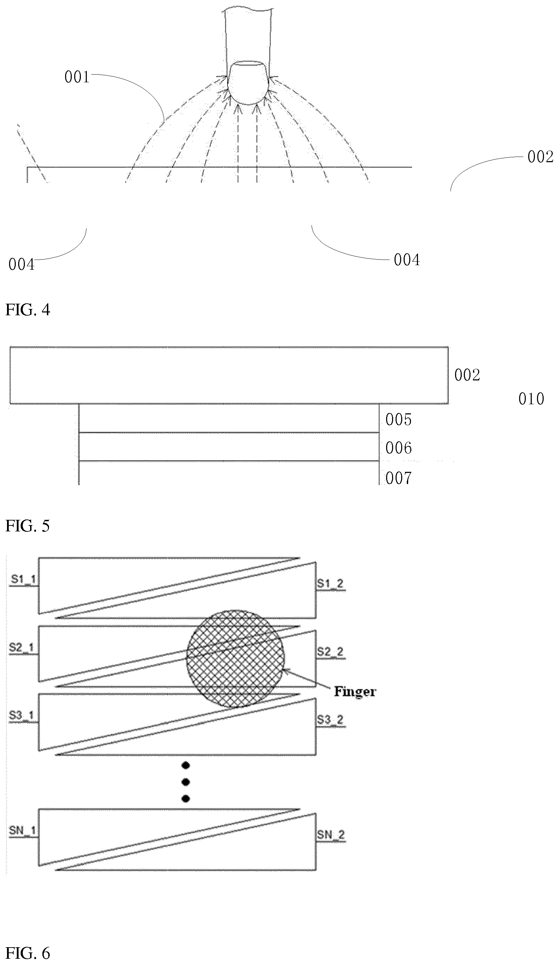

The existing touch screen includes a mutual capacitance detection mode and a self-capacitance detection mode. For the mutual capacitance detection mode, as shown in FIG. 1, the lower end of a cover 002 is provided with a driving electrode 003 and a sensing electrode 004; since electric field lines 001 are gathered near the junction of the driving electrode 003 and the sensing electrode 004, the farther away from the electrode junction, the sparser the electric field lines 001 are; at this time, when the finger is in the air, the electric field lines that can be changed is almost zero, as shown in FIG. 2, that is, the mutual capacitance between the driving electrode 003 and the sensing electrode 004 is nearly unchanged, i.e., the position of the finger in the three-dimensional space cannot be detected by detecting the change of the mutual capacitance. Different from the mutual capacitance detection mode, in the self-capacitance detection mode, the electric field lines 001 emitted by a sensing channel belong to a divergent field, as shown in FIG. 3; at this time, when the finger approaches, the electric field lines 001 will reach the ground (i.e., the finger) with the shortest path, as shown in FIG. 4, which is thus suitable for detecting the position of the finger in the three-dimensional space.

In addition, as shown in FIG. 5, the common touch screen on the market is an externally mounted touch screen 010, which is generally constituted by a cover 002 and a touch sensing unit 005. The externally mounted touch screen 010 is attached to a display device 007 through a transparent optical adhesive 006 to form a touch display module to realize human-computer interaction; and the sensing pattern of the self-capacitance of the externally mounted touch screen 010 is a triangle, as shown in FIG. 6, Sx_1 and Sx_2 form a detection channel pair Sx. The position of the finger in the horizontal direction is determined according to the ratio of a capacitance between the finger and the channel Sx_1 in the detection channel pair to a capacitance between the finger and the channel Sx_2 in the detection channel pair (that is, the ratio of the coupling area). Similarly, the position of the finger in the vertical direction is determined according to the ratio of capacitances for different detection channel pairs (for example, the capacitances of the finger with respect to the three detection pairs S1, S2, and S3, respectively).

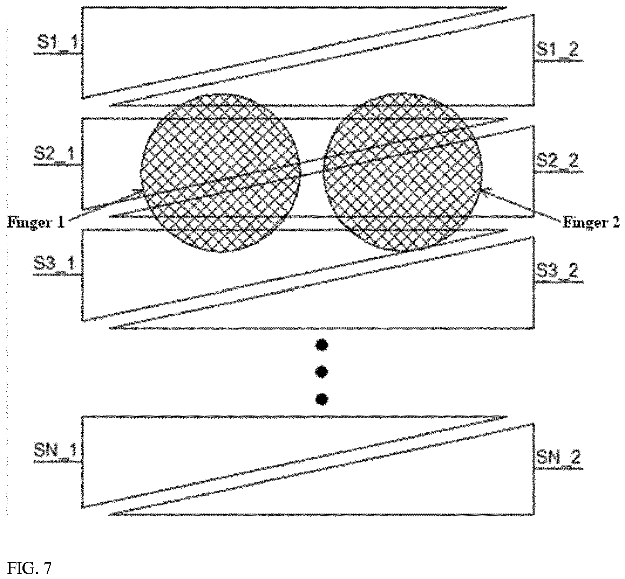

However, in the case of two-finger or multi-finger touch, as shown in FIG. 7, since the ratio of a capacitance between the human body and S2_1 to a capacitance between the human body and S2_2 (i.e., two fingers) is 1:1, at this time, the identified horizontal position is the middle of the coordinate positions of two fingers in the horizontal direction, and is a unique coordinate point, which is the same as the coordinate point of a single-finger touch in such horizontal position, so that it is impossible to distinguish whether the above-mentioned coordinate point is generated by a two-finger touch or a single-finger touch.

### SUMMARY

The utility model provides a capacitive touch screen module and an electronic terminal, so as to solve the technical problem in the prior art that it cannot be distinguished whether the determined unique coordinate point is generated by a two-finger touch or a single-finger touch.

According to some embodiments of the present utility model, a capacitive touch screen module is provided, including: an externally mounted touch screen, the externally mounted touch screen includes: a cover and a sensing unit matrix located below the cover, and the sensing unit matrix includes a plurality of sensing units.

The capacitive touch screen module as described above, the sensing units in the sensing unit matrix are led out one by one to an edge of the externally mounted touch screen by wiring.

The capacitive touch screen module as described above, the sensing unit matrix and the wiring are both disposed on the cover.

The capacitive touch screen module as described above, the sensing unit matrix and the wiring are both disposed on a second substrate, and the sensing unit matrix disposed on the second substrate is attached to the cover through a transparent optical adhesive.

The capacitive touch screen module as described above, further includes a first substrate, an upper surface of the first substrate is provided with a shielding layer, and the shielding layer disposed on the upper surface of the first substrate is attached to the sensing unit matrix through a transparent optical adhesive.

The capacitive touch screen module as described above, a lower surface of the second substrate is provided with a shielding layer.

The capacitive touch screen module as described above, at least one of a first substrate and a second substrate in the capacitive touch screen module is formed by a glass or an organic polymer film.

The capacitive touch screen module as described above, the shielding layer is formed by an Indium Tin Oxide (ITO) material.

According to some other embodiments of the present utility model, an electronic terminal is provided, including: a display device and the above capacitive touch screen module, where the capacitive touch screen module is attached to the display device through a transparent optical adhesive.

The electronic terminal as described above, when the capacitive touch screen includes a shielding layer, the shielding layer is located between the sensing unit matrix in the capacitive touch screen module and the display device.

For the capacitive touch screen module and the capacitive touch screen provided by the utility model, the spatial position of the finger can be accurately and effectively measured by providing the sensing unit matrix with a plurality of sensing units. The multi-finger touch situation can also effectively be identified, and the specific position touched by each finger can be identified, which effectively solves the technical problem in the prior art that it cannot be distinguished whether the determined unique coordinate point is generated by a two-finger touch or a single-finger touch. The accuracy and reliability of the capacitive touch screen module are guaranteed, which is beneficial to the commercially promotion and application.

Additional aspects and advantages of the utility model will partly be presented in the following description, partly become apparent in the following description or be appreciated in practicing of the utility model.

### BRIEF DESCRIPTION OF THE DRAWINGS

The above and other objects, features and advantages of embodiments of the present utility model will become more apparent by the following detailed description with reference to the accompanying drawings. In the drawings, various embodiments of the present utility model will be described in an illustrative, but not limitative way, among them,
FIG. 1 is a schematic diagram of electric field distribution of a touch screen with a mutual capacitance detection mode in the prior art of the present utility model;
FIG. 2 is a schematic diagram of electric field distribution of a touch screen with a mutual capacitance detection mode when a finger is involved in the prior art of the present utility model;
FIG. 3 is a schematic diagram of electric field distribution of a touch screen with a self-capacitance detection mode in the prior art of the present utility model;
FIG. 4 is a schematic diagram of electric field distribution of a touch screen with a self-capacitance detection mode when a finger is involved in the prior art of the present utility model;
FIG. 5 is a schematic structural diagram of a touch screen in the prior art of the present utility model;
FIG. 6 is a first schematic diagram of a triangular sensing pattern of a self-capacitance of an externally mounted touch screen in the prior art of the present utility model;
FIG. 7 is a second schematic diagram of a triangular sensing pattern of a self-capacitance of an externally mounted touch screen in the prior art of the present utility model;
FIG. 8 is a first exploded schematic diagram of a capacitive touch screen module and a display device according to an embodiment of the present utility model;
FIG. 9 is a schematic diagram of wiring of a capacitive touch screen module according to an embodiment of the present utility model;
FIG. 10 is a first schematic structural diagram of a capacitive touch screen module according to an embodiment of the present utility model;
FIG. 11 is a second schematic structural diagram of a capacitive touch screen module according to an embodiment of the present utility model;
FIG. 12 is a second exploded schematic diagram of a capacitive touch screen module and a display device according to an embodiment of the present utility model;
FIG. 13 is a third schematic structural diagram of a capacitive touch screen module according to an embodiment of the present utility model;
FIG. 14 is a fourth schematic structural diagram of a capacitive touch screen module according to an embodiment of the present utility model;
FIG. 15 is a schematic structural diagram of a sensing unit matrix in a capacitive touch screen module according to an embodiment of the present utility model;
FIG. 16 is a first schematic diagram of the principle for measuring a spatial position of a finger using a capacitive touch screen module according to an embodiment of the present utility model; and
FIG. 17 is a second schematic diagram of the principle for measuring a spatial position of a finger by using a capacitive touch screen module according to an embodiment of the present utility model.

In the drawings:

| | |
|---|---|
| 001, electric field line; | 002, cover; |
| 003, driving electrode; | 004, sensing electrode; |
| 005, touch sensing unit; | 006, transparent optical adhesive; |
| 007, display device; | 010, externally mounted touch screen; |
| 101, externally mounted touch screen; | 1011, cover; |
| 1012, sensing unit matrix; | 10121, sensing unit; |
| 102, transparent optical adhesive; | 103, display device; |
| 104, wiring; | 105, insulating layer; |
| 106, substrate; | 1061, first substrate; |
| 1062, second substrate; | 107, shielding layer. |

### DESCRIPTION

Embodiments of the present utility model are described in detail below, and the examples of the embodiments are illustrated in the drawings, where the same or similar reference numerals are used to refer to the same or similar elements or elements having the same or similar functions. The following embodiments described with reference to the drawings are illustrative and only used to explain the present utility model, but may not be interpreted as the restrictions of the present utility model.

In the description of the present utility model, it should be understood that the orientation or positional relationship indicated by the terms "length", "width", "height", "upper", "lower", "front", "back", "left", "right", "inside", "outside" and the like is based on the orientation or positional relationship shown in the drawings, and is merely for the convenience of describing the present utility model and simplifying description, and does not indicate or imply that the referred device or element must have a particular orientation, or must be constructed and operated in a particular orientation, therefore it should not to be construed as limiting the utility model.

In the description of the present utility model, the meaning of "a plurality of" is at least two, such as two, three, etc., unless specifically defined otherwise. In the present utility model, the terms "install", "couple", "connect", "fix" and the like shall be understood broadly, and may be, for example, a fixed connection, a detachable connection, or an integral, unless otherwise specifically specified and defined, may be directly connected, or may be indirectly connected through an intermediate medium, may be the internal communication of two elements or the interaction of two elements, unless explicitly defined otherwise. For those skilled in the art, the specific meanings of the above terms in the present utility model can be understood according to a specific situation.

In the description of the present specification, the description with reference to the terms "an embodiment", "some embodiments", "example", "specific example", or "some examples" and the like means a specific feature, structure, material or characteristic described in combination with the embodiment or example is included in at least one embodiment or example of the present utility model. In the present specification, the schematic representation of the above terms is not necessarily directed to the same embodiment or example. Furthermore, the particular features, structures, materials, or characteristics described may be combined in a suitable manner in any one or more embodiments or examples. In addition, various embodiments or examples described in the specification and features of various embodiments or examples may be integrated and combined without contradiction.

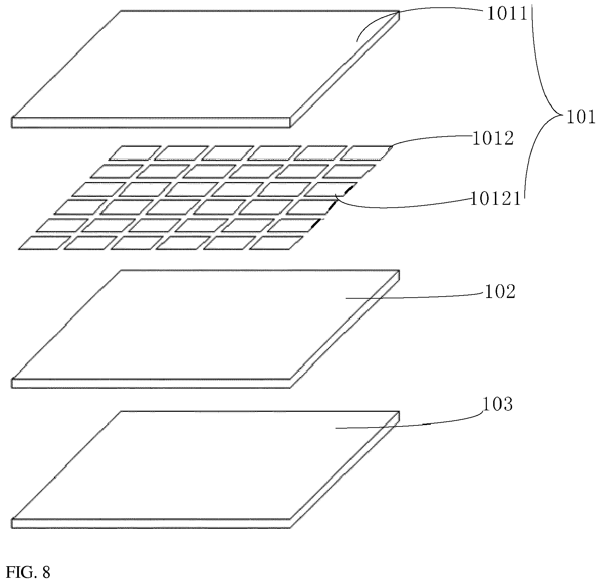

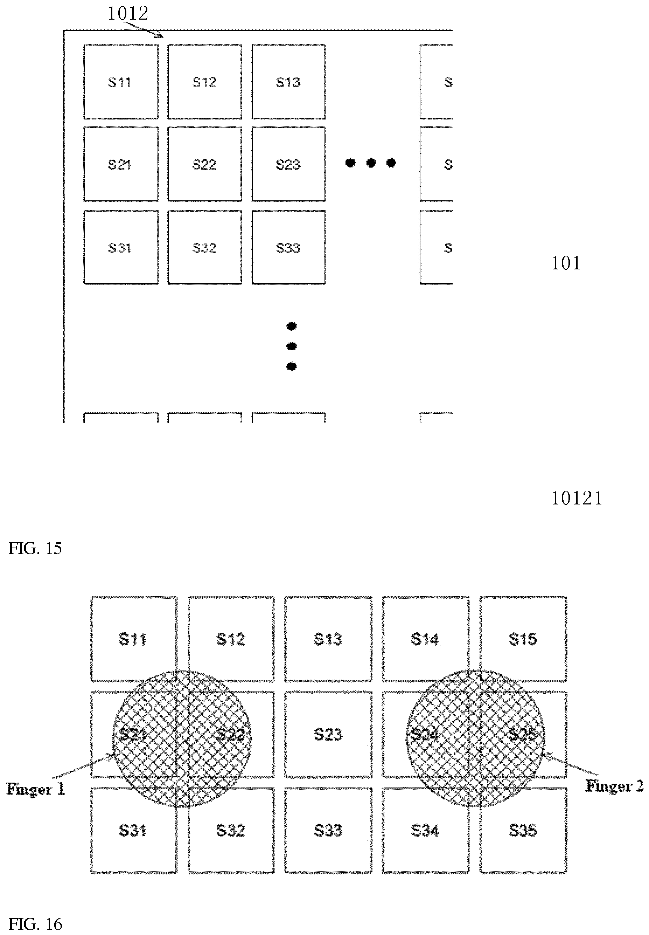

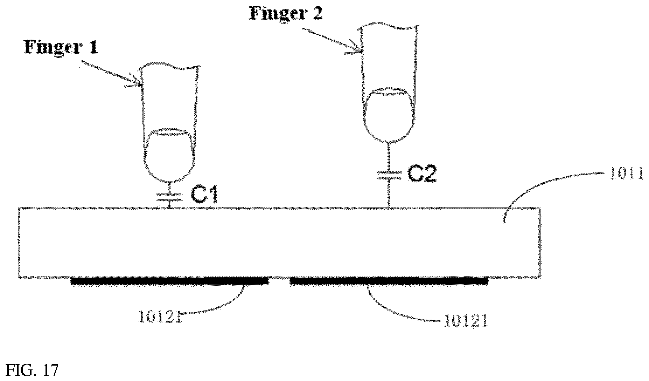

FIG. 8 is a first exploded schematic diagram of a schematic diagram of a capacitive touch screen module and a display device according to an embodiment of the present utility model; FIG. 15 is a schematic structural diagram of a sensing unit matrix in a capacitive touch screen module according to an embodiment of the present utility model; FIG. 16 is a first schematic diagram of a principle for measuring a spatial position of a finger by using a capacitive touch screen module according to an embodiment of the present utility model; FIG. 17 is a second schematic diagram of the principle for measuring a spatial position of a finger by using a capacitive touch screen module according to an embodiment of the present utility model. See FIG. 8 and FIGs. 15-17, this embodiment provides a capacitive touch screen module. The capacitive touch screen module can be attached to a display device 103 through a transparent optical adhesive 102, and includes an externally mounted touch screen 101. Specifically, the externally mounted touch screen 101 includes a cover 1011 and a sensing unit matrix 1012 located below the cover 1011, and the sensing unit matrix 1012 includes a plurality of sensing units 10121.

The specific number of the sensing units 10121 included in the sensing unit matrix 1012 is not limited in this embodiment, and can be set by those skilled in the art according to specific design requirements. For example, the number of the sensing units 10121 may be 8, 9, 15, 16, 18 or other custom numbers as long as the plurality of sensing units 10121 can be arranged in a matrix manner to form the sensing unit matrix 1012. In addition, the sensing units 10121 in the sensing unit matrix 1012 are used to detect the position of the finger, the specific shape and structure of the sensing unit 10121 are not limited in this embodiment, and may be set according to specific design requirements. For example, the shape of the sensing unit 10121 may be a rectangle, a square, a circle, an ellipse, a triangle, or other custom shapes. In order to facilitate accurate measurement of the position of the finger, it is preferable that the shape of the sensing unit 10121 may be the rectangle or the square.

The spatial position of the finger is detected using the capacitive touch screen module of this embodiment. In this embodiment, taking the shape of the sensing unit 10121 being a rectangle as an example, as shown in FIG. 15, the sensing unit matrix 1012 includes a plurality of regularly arranged sensing units 10121, specifically S11-SNM, where N and M are respectively a matrix row coordinate mark and a matrix column coordinate mark, and the shapes of the above mentioned sensing units 10121 are all rectangles.

When detecting multiple fingers on the capacitive touch screen module in the XY plane, as shown in FIG. 16, the two-finger touch is taken as an example, where the finger 1 has coupling to six sensing units 10121 such as S11, S12, S21, S22, S31, and S32 in the sensing unit matrix 1012, and the finger 2 has coupling to six sensing units 10121 such as S14, S15, S24, S25, S34, and S35. As can be seen from the above, the sensing units 10121 corresponding to the two fingers do not coincide, so that the position touched by the finger 1 and the finger 2 respectively can be distinguished. Specifically, the specific coordinate position of the finger in the XY plane can be determined according to the ratio of the coupling capacitances between the finger and the sensing units 10121. Similarly, in the case of a multi-finger touch, since the sensing units 10121 corresponding to the multiple fingers do not coincide, the position touched by each finger can also be distinguished.

When the touching multiple fingers are detected in the Z direction, as shown in FIG. 17, since the fingers have different heights, the coupling capacitances C with respect to the sensing units 10121 are different, and the lower the height, the larger the coupling capacitance C is; the coupling capacitance corresponding to the finger 1 is C1, and the coupling capacitance corresponding to the finger 2 is C2, thus the coordinate detection in the Z direction can be realized by detecting the magnitude of the coupling capacitance C.

For the capacitive touch screen module provided in this embodiment the spatial position of the finger can be accurately and effectively measured by providing the sensing unit matrix 1012 with a plurality of sensing units 10121. The multi-finger touch situation can also be effectively identified, and the specific position touched by each finger can be identified, which effectively solves the technical problem in the prior art that it cannot be distinguished whether the determined unique coordinate point is generated by a two-finger touch or a single-finger touch. The accuracy and reliability of the capacitive touch screen module are guaranteed, which is beneficial to the commercially promotion and application.

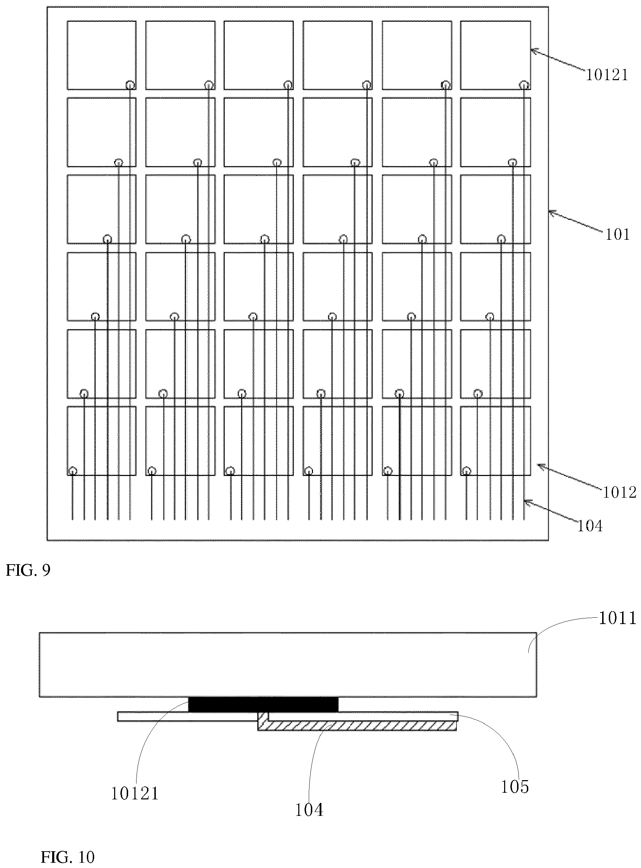

FIG. 9 is a schematic diagram of wiring of a capacitive touch screen module according to an embodiment of the present utility model. Based on the above embodiments, with continued reference to FIG. 9, each of the sensing units 10121 in the sensing unit matrix 1012 is led out one by one to the edge of the externally mounted touch screen 101 through wiring 104.

The sensing units 10121 can detect the spatial position of the finger, which is specifically determined via the coupling capacitances between the finger and the sensing units 10121. At this time, the sensing unit 10121 can collect an electrical signal generated when the finger contacts, and transfer the electrical signal through the wiring 104, so that the electrical signal is analyzed and processed accurately to determine the coupling capacitance between the finger and the sensing unit 10121. Therefore, each of the sensing units 10121 is provided with wiring 104, and the wiring 104 can be led to the edge of the externally mounted touch screen 101 to facilitate the transfer of the electrical signal.

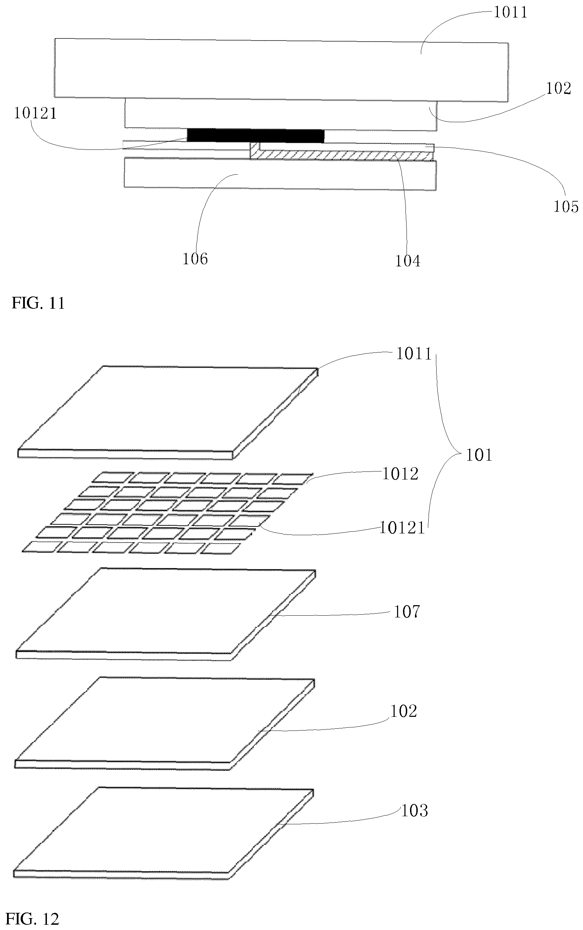

FIG. 10 is a first schematic structural diagram of a capacitive touch screen module according to an embodiment of the present utility model; FIG. 11 is a second schematic structural diagram of a capacitive touch screen module according to an embodiment of the present utility model. Based on the above embodiments, with continued reference to FIGs. 10-11, the specific arrangement manner of the sensing unit matrix 1012 and the wiring 104 is not limited in this embodiment, and those skilled in the art may set it according to specific design requirements. More preferably, in an implementation, the sensing unit matrix 1012 and the wiring 104 are both disposed on the cover 1011, specifically, the sensing units 10121 in the sensing unit matrix 1012 and the wiring 104 are both disposed located below the cover 1011, as shown in FIG. 10.

In a specific design, in order to avoid signal interference or signal short circuit between the wiring 104 and other portions of the sensing unit 10121, an insulating layer 105 is disposed between the wiring 104 and the sensing unit 10121. An opening for the wiring 104 to pass through is disposed on the insulating layer 105, and the wiring 104 is disposed passing through the opening and at the edge of the externally mounted touch screen 101.

In another implementation, as shown in FIG. 11, the capacitive touch screen module further includes a substrate 106, and the substrate 106 may be formed by a glass or an organic polymer film. At this time, the sensing unit matrix 1012 and the wiring 104 may be disposed on the substrate 106, and further, the sensing unit matrix 1012 disposed on the substrate 106 is attached to the cover 1011 through the transparent optical adhesive 102.

Similarly, in order to avoid signal interference or signal short circuit between the wiring 104 and other portions of the sensing unit 10121, an insulating layer 105 is further disposed between the wiring 104 and the sensing unit 10121. And the sensing unit 10121, the insulating layer 105, and the wiring 104 are all disposed on the upper surface of the substrate 106 and then attached to the cover 1011 through the transparent optical adhesive 102.

It should be noted that the arrangement of the sensing unit 10121 and the wiring 104 being disposed on the cover 1011 or the substrate 106 means being deposited thereon by various processes such as sputtering and evaporation.

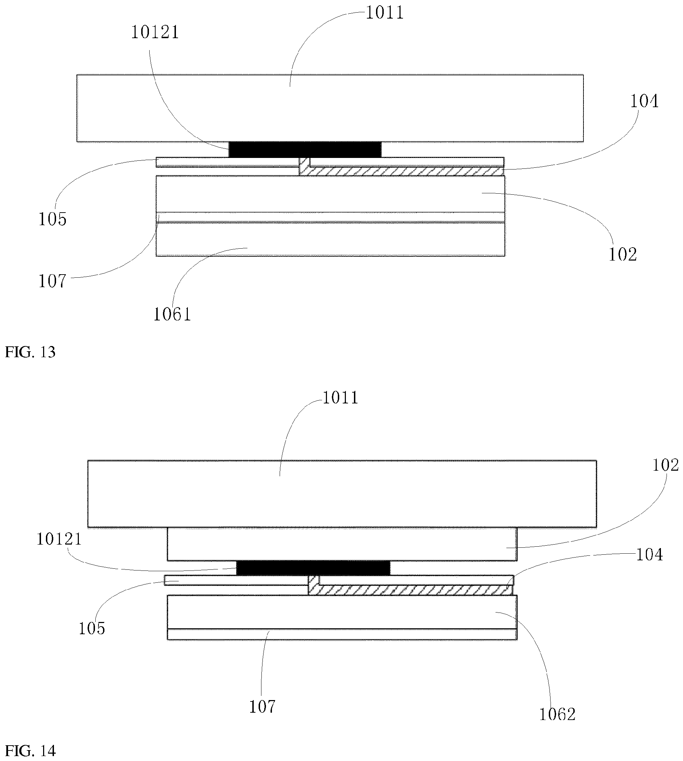

FIG. 12 is a second exploded schematic diagram of a capacitive touch screen module and a display device according to an embodiment of the present utility model; FIG. 13 is a third schematic structural diagram of a capacitive touch screen module according to an embodiment of the present utility model; FIG. 14 is a fourth schematic structural diagram of a capacitive touch screen module according to an embodiment of the present utility model. On the basis of the above embodiments, with continued reference to the FIGs. 12-14, in order to improve the stability and reliability of the capacitive touch screen module, in an implementation, a first substrate 1061 is further included on the basis of FIG. 10. The upper surface of the first substrate 1061 is provided with a shielding layer 107, and the shielding layer 107 disposed on the upper surface of the first substrate 1061 is attached to the sensing unit matrix 1012 through the transparent optical adhesive 102.

Specifically, as shown in FIG. 13, the externally mounted touch screen 101 includes the cover 1011 and the sensing unit matrix 1012 located below the cover 1011. The sensing unit matrix 1012 includes a plurality of sensing units 10121, and each of the sensing units 10121 is configured with the wiring 104. The insulating layer 105 is further disposed between the wiring 104 and the sensing unit 10121. The shielding layer 107 is attached to the upper surface of the first substrate 1061 and then attached to the upper components through the transparent optical adhesive 102.

In another implementation, on the basis of FIG. 11, the substrate 106 is denoted as a second substrate 1062, and the lower surface of the second substrate 1062 is provided with a shielding layer 107 for reducing the interference of the noise with the externally mounted touch screen 101.

Specifically, as shown in FIG. 14, the externally mounted touch screen 101 includes the cover 1011 and the sensing unit matrix 1012 located below the cover 1011. The sensing unit matrix 1012 is attached to the cover 1011 through the transparent optical adhesive 102. The sensing unit matrix 1012 includes a plurality of sensing units 10121, and each of the sensing units 10121 is configured with the wiring 104. The insulating layer 105 is further disposed between the wiring 104 and the sensing unit 10121. The wiring 104 is disposed on the second substrate 1062. The shielding layer 107 is disposed on the lower surface of the second substrate 1062.

It should be noted that the arrangement of the shielding layer 107 being disposed on the substrate 106 means being deposited thereon by various processes such as sputtering and evaporation.

In this embodiment, the specific material of the shielding layer 107 is not limited, and those skilled in the art can select according to the function to be realized. Specifically, the shielding layer 107 can be formed by an Indium Tin Oxide (ITO) material or other transparent conductive materials. At this time, the stability and reliability of the use of the shielding layer 107 can be effectively ensured, and the safety and reliability of the capacitive touch screen module are further improved.

By providing the capacitive touch screen module with the shielding layer 107, the stability and reliability of the capacitive touch screen module are effectively ensured, and since the implementations are various, the applicable range of the capacitive touch screen module is effectively expanded, and the flexibility of the design of the capacitive touch screen module is improved, which effectively improves the market competitiveness of the capacitive touch screen module.

Another aspect of the present utility model provides an electronic terminal, including the capacitive touch screen module of any one of the above embodiments and a display device, where the capacitive touch screen module can be attached to the display device through a transparent optical adhesive.

Continuing to refer to FIGs. 12-14, the shielding layer 107 is disposed between the display device 103 and the externally mounted touch screen 101 of the capacitive touch screen module. Specifically, the shielding layer 107 is located between the sensing unit matrix 1012 of the capacitive touch screen module and the display device 103, and the shielding layer 107 is used to reduce the interference of the noise generated by the display device 103 with the externally mounted touch screen 101.

Under the condition that the shielding layer 107 is located between the sensing unit matrix 1012 and the display device 103, the specific position of the shielding layer 107 is not limited in this embodiment, and the person skilled in the art can set it according to specific design requirements. The shielding layer 107 is mainly used to reduce the influence of the noise generated by the display device 103 on the sensing unit matrix 1012. The specific implementations may be as shown in FIG. 13 and FIG. 14.

By providing the electronic terminal with the shielding layer 107, the stability and reliability of the electronic terminal are effectively ensured, and since the implementations are various, the application range of the electronic terminal is effectively expanded, and the flexibility of the design of the electronic terminal is improved, which effectively improves the market competitiveness of the electronic terminal.

Finally, it should be noted that the above embodiments are only for explaining the technical solution of the present utility model, and are not intended to be limiting; although the present utility model has been described in detail with reference to the foregoing embodiments, those skilled in the art should understand that the technical solutions described in the foregoing embodiments may be modified, or some or all of the technical features may be equivalently replaced; and such modifications or substitutions do not deviate the nature of the technical solution from the scope of the technical solution in the embodiments according to the present utility model.

## Claims

1. A capacitive touch screen module, comprising: an externally mounted touch screen, wherein the externally mounted touch screen comprises: a cover and a sensing unit matrix located below the cover, and the sensing unit matrix comprises a plurality of sensing units.

2. The capacitive touch screen module according to claim 1, wherein the sensing units in the sensing unit matrix are led out one by one to an edge of the externally mounted touch screen by wiring.

3. The capacitive touch screen module according to claim 2, wherein the sensing unit matrix and the wiring are both disposed on the cover.

4. The capacitive touch screen module according to claim 2, wherein the sensing unit matrix and the wiring are both disposed on a second substrate, and the sensing unit matrix disposed on the second substrate is attached to the cover through a transparent optical adhesive.

5. The capacitive touch screen module according to claim 3, further comprising a first substrate, wherein an upper surface of the first substrate is provided with a shielding layer, and the shielding layer disposed on the upper surface of the first substrate is attached to the sensing unit matrix through a transparent optical adhesive.

6. The capacitive touch screen module according to claim 4, wherein a lower surface of the second substrate is provided with a shielding layer.

7. The capacitive touch screen module according to any one of claims 4-6, wherein at least one of a first substrate and a second substrate in the capacitive touch screen module is formed by a glass or an organic polymer film.

8. The capacitive touch screen module according to claim 5 or 6, wherein the shielding layer is formed by an Indium Tin Oxide, ITO, material.

9. An electronic terminal, comprising: a display device and the capacitive touch screen module according to any one of claims 1-8, wherein the capacitive touch screen module is attached to the display device through a transparent optical adhesive.

10. The electronic terminal according to claim 9, wherein when the capacitive touch screen comprises a shielding layer, the shielding layer is located between the sensing unit matrix in the capacitive touch screen module and the display device.
